# EUROPEAN PATENT SPECIFICATION

(11) **EP 3 893 646 B1**
(45) Date of publication and mention of the grant of the patent: **18.02.2026**
(21) Application number: 19820904.1
(22) Date of filing: 11.12.2019
(51) Int. Cl.: A01N 59/12, A01N 25/10, A01N 25/34, C08L 77/02, C08L 39/06, A01P 1/00

(54) **BIOCIDAL POLYAMIDE-COMPOSITIONS, METHODS FOR PREPARING THE SAME AND USES THEREOF**
BIOZIDE MISCHUNGEN AUF POLYAMIDBASIS, ZUSAMMENSETZUNGEN, VERFAHREN ZUR HERSTELLUNG UND VERWENDUNG DAVON
MÉLANGES BIOCIDES À BASE DE POLYAMIDE, COMPOSITIONS, LEURS PROCÉDÉS DE PRÉPARATION ET LEURS UTILISATIONS

(30) Priority: 11.12.2018 EP 18211735
(43) Date of publication of application: 20.10.2021
(73) Proprietor: X-Infex B.V., 1406 NS Bussum (NL)
(72) Inventor: ULMER, Herbert Wilhelm, 1406 NS Bussum (NL); KLAY, Nico Hendrik, 1406 NS Bussum (NL)
(74) Representative: V.O.
(86) International application number: PCT/NL2019/050824
(87) International publication number: WO 2020/122717

(56) References cited:
- DE-A1- 2 722 346
- US-A- 5 051 256
- US-A- 5 399 431
- US-A1- 2007 287 803
- US-A1- 2016 369 435
- US-B1- 6 312 705
- CLARK ET AL: "Morphological changes in polyamide/PVP blends", POLY, ELSEVIER SCIENCE PUBLISHERS B.V, GB, vol. 39, no. 3, 1 January 1998 (1998-01-01), pages 507 - 516, XP005791507, ISSN: 0032-3861, DOI: 10.1016/S0032-3861(97)00314-5
- JAYARAJA K KUMAR ET AL: "APPLICATION OF BROAD SPECTRUM ANTISEPTIC POVIDONE IODINE AS POWERFUL ACTION: A REVIEW", JOURNAL OF PHARMACEUTICAL SCIENCE AND TECHNOLOGY, vol. 1, 1 January 2009 (2009-01-01), pages 48 - 58, XP055548880

## Description

The invention relates to the field of polymers, in particular to polymer systems based on polyamide (PA) having a broad spectrum biocidal activity and the use thereof in the manufacture of biocidal products.

Polyamides (PA) or nylons are well known polymers that are used across a broad array of markets and applications. The materials are durable and tough and can be easily extruded and molded into almost an unlimited number of shapes and forms, including fibers, sheets, molded parts, filaments and bristles. The materials show excellent abrasion resistance, outstanding dimensional stability and high tensile strength. Due to their versatility, PA's are used in a broad range of applications including: hard service coatings, carpets, upholstery, clothing, structural parts, toothbrush bristles, air and liquid filters, catheters, breathing tubes, medical devices and food packaging to name a few. The PA materials can be further blended with a host of other polymers (e.g. polyethylene) to further broaden their properties and use applications.

Although PA's have excellent mechanical properties, the materials are not biocidal and microorganisms readily populate PA surfaces, especially under humid or wet conditions. Multiple studies have shown that PA's actually support microbial growth that may have consequences as related to consumer health. Research presented in 2015 by Aber *et al.* detailed the transmission of fecal coliforms readily took place in communal bathrooms at universities via toothbrushes (commonly made from PA) and serve as a vector for transmission of potentially pathogenic organisms. (Aber et al., Toothbrush Contamination in Communal Bathrooms, research study presented at the annual American Society for Microbiology annual meeting in New Orleans, Louisiana, June 2, 2015). Another study investigated fungal and bacterial growth in dust embedded in nylon carpets at varying relative humidity. An increase of humidity levels greater than 80% activated microorganism growth that could account for up to 50% of the air borne microbes potentially effecting consumer health (Dannemiller et al., Indoor Air (2017) 27, 354-363). Nylon carpets placed on cool cement floors would be a perfect environment for such microorganism growth to occur. Whereas PA's were never developed or intended to be biocidal, a control over biocidal activity would be a very desirable attribute for many potential use applications.

PA's are also used in a large number of medical devices and health related products that would greatly benefit from the attribute of being biocidal. Such PA products as: sutures, catheters (urine, blood, fluids), disposable syringes, hospital containers, breathing tubes, hospital garments, medical packaging, air filters, etc. are just a few of the many products that can be involved in the spread of undesirable pathogenic microorganisms, resulting in Hospital-acquired infections or Healthcare-associated infections (HAI's). HAI's are caused by the spread of viral, bacterial and fungal pathogens due to a healthcare visit or care (e.g. hospital, doctors office, nursing home, etc.). The most common ways of acquiring HAI's are via bloodstream infection, pneumonia, urinary tract infection and surgical site infection. PA's are responsible for the fabrication of a multitude of products that are in direct contact with: wounds, air passageway, blood and urinary tract and thus become a potential source for pathogenic contamination risk resulting in HAI's. If not a source, PA's can become a sight for the promotion of unwanted microorganism accumulation, which can lead to unwanted infections. An article released by the Royal College of Ophthalmologists detailing the bacterial contamination of monofilament nylon corneal sutures and the possibility of such materials seeding a suture track infection (Heaven et al, Eye, 1995, 9: 116-118).

There is ample prior art describing PA materials that are made biocidal by coating and/or extruding the polymer with known small molecule residue-producing antibacterial agents such as: quaternary amino compounds (e.g. benzalkonium chloride and cetylpyridinium chloride), phenols and cresols, halophenols (e.g. *p*-chloro-*m*-xylenol), biguanides (e.g. chlorhexidine), anilides (e.g triclocarbon), and triclosan.

Unfortunately, however, the drawbacks of these PA-based systems are many. First, the small molecule agents often leach from the PA, which causes potential health concerns to the living host or ecological concerns due to water contamination due to the inherent toxicity of the antibacterial agent. For example, research has indicated that triclosan can alter hormone regulation and interfere with fetal development. Second, many antibacterial agents are not acceptable for "in-body" use applications such as sutures, catheters, etc. due to their general toxic character to normal cells and the risk of leaching. Third, most antibacterial agents are not active against viruses.

One class of antibacterial agents that has garnered significant attention and is responsible for a number of commercial systems is the use of metals such as: copper, zinc, silver and their corresponding derivatives and/or salts. These metal systems are either coated onto or blended into the polymer substrate. Nano-silver has been especially singled out as a desirable antibacterial metal that can render coated or extruded systems biocidal. Although these systems are promising and have had commercial success, there are also serious concerns with the use of metal and nano-metal systems. First, the metals have a potential for leaching and/or removal from the PA system. A study on washing nano-silver infused fabrics showed that the level of nano-silver removed from the clothing after just one wash was 20-35%. Second, the toxicity of metal and especially nano-metal systems is not completely understood. Nano-metal systems have the ability to cross the skin/cell barrier and thus there is concern on patient safety. The nano-metal systems are also easily leached or removed from treated systems and enter the ecosystem, where the effect of these metal nanoparticles on the environment is unknown. One research paper showed when zebrafish embryos were exposed to nanosilver they became very mutated (Bar-Ilam et al, Toxicity Assessments of Multisized Gold and Silver Nanoparticles in Zebrafish Embryos, Small, 2009, V. 5, I.15, 1897-1910)

Related to antibacterial agents, there are also many examples of adding known antibiotic agents to the PA or polymer system in order to make them antibacterial. Unfortunately, the wide use of antibiotics has led to the generation of a number of antibiotic resistant bacterial or "superbugs" as they are referred to. This development is especially troublesome since the potential risk of acquiring HAI's that cannot be treated has drastically increased, which has direct consequences to patients' health. These resistant "superbugs" have also gradually become a larger menace to the overall general population with the discovery of a number of antibiotic resistant bacteria in normal communities, far removed from the healthcare setting. Unfortunately, the number of antibiotic resistant bacteria is predicted to continue to grow and will preferentially affect large population segments with compromised immunities such as the elderly and chronic patients (e.g. diabetes). These same groups require significant patient care (dialysis, injections, catheterization, etc.) in communal setting that further increases the risk of acquiring HAI's that have become untreatable.

For this reason, "Antibacterial Resistance" has been identified by the World Health Organization (WHO) as one of the Global Health Threats of the 21st century. It has been predicted that up to 10 million fatalities/year will be due to antibacterial resistant infections by 2050 if nothing is done to combat this serious health issue.

WO2002/006579 discloses a biocidal nylon that is prepared by covalently attaching heterocyclic N-halamine precursor moieties to the PA substrate and that are then regenerated by washing with a halogenated solution. Whereas this gives a nylon having biocidal properties, the process is lengthy and complicated and does not have the commercial simplicity needed for a broad commercial acceptance. Furthermore, the chemistry requires the handling of toxic materials and the materials have only limited toxicological evaluation.

Accordingly, the present inventors set out to develop a new class of biocidal PA materials. In particular, they aimed at providing a biocidal PA-based material that can combat existing and future antibacterial superbugs and viruses as well as being simple to manufacture. Such materials having biocidal activity would be highly desirable for specific applications, especially application that could improve consumer and patient health and reduce the risk of HAI's.

Quite unexpectedly, the present inventors have discovered that PA's can be coextruded with suitable iodine (I) source comprising elemental iodine to form PA-I complexes that are stable, compatible and inherently biocidal. The iodine source may further include iodine salts and polyvinylpyrrolidone-iodine (PVP-I) complex. In addition to generating PA-I complexes that are inherently biocidal throughout the entire polymer matrix, the addition of PVP-I and/or polyvinylpyrrolidone (PVP) to the extruding process can further give control over resultant physical/chemical properties of the resultant extruded PA-I system as well as effecting the biocidal activity to generate PA-I complex systems with tunable biocidal activity and profiles.

The novel PA-I systems show a broad-spectrum biocidal activity against bacteria, viruses, yeasts, fungi, mold and protozoa. The PA-I materials are stable complexes that show long term biocidal activity. The PA-I materials are non-selective in their germicidal activity and can be used where PA materials having bactericide, fungicide, viricide, sporicide, amebicide, insecticide or nematocide activity are desired. The resultant PA-I products have low animal and phytotoxicity, are non-irritating to skin and mucous membranes, are non-sensitizing, do not delay healing or formation of granulation tissue and are non-stinging. The PA-I complexes and blends show long term biocidal activity.

The iodine source used for the coextrusion is elemental iodine, with optional further iodine sources being suitably selected from the group consisting of iodine and iodide salts, polyvinylpyrrolidone-iodine (PVP-I), and any mixture thereof. The actual PA-I complexes are prepared by hot melt coextrusion using common extruding equipment and techniques that are well known to the industry. Because the complexation according to the invention is performed in the melt, the actual process is quick and solvent-free to provide a process that is both economical and easy to implement on the commercial scale.
Accordingly, in one embodiment the invention provides a method for providing a biocidal polyamide-iodine (PA-I) blend, comprising mixing polyamide (PA) with a suitable source of iodine (I) comprising elemental iodine and optional further ingredients, followed by solubilizing the mixture by subjecting the mixture to a hot melt extrusion process to obtain in a homogeneous blend in which all ingredients are uniformly distributed throughout the polyamide-iodine complex matrix.
Also provided is a stable homogeneous PA-I blend obtainable by or obtained by the coextrusion process of a polyamide with elemental iodine, or a mixture thereof with PVP-I. In particular, the invention provides a homogenous PA-I blend obtainable by a method according to the invention, comprising at least 0.1 wt% iodine, preferably 0.5 wt% iodine, such that the blend is biocidal. As used herein, biocidal refers to a wide range effects that serve to deter, render harmless or destroy harmful organisms. Insects, fungi, rodents, mussels, algae or bacteria and viruses (including pathogens) are classified as harmful organisms if they are undesirable or harmful to humans, their activities and products they use or produce, or to animals and the environment. Hence, the term "biocidal" describes properties that include antimicrobial, antifungal, antibacterial, etc.

A further element to the invention described herein, is the discovery that other "amide" group sources can be included in the PA-I extrusion process to give tunable biocidal properties and profiles. It has been discovered that the iodine complex behaves differently with different amide groups, specifically for polymers having side group cyclic amide groups as is the case for polyvinylpyrrolidone (PVP) and polyvinylcaprolactam. These polymers are made by free-radical polymerization and result in cyclic amide pendent groups off the ethylene backbone of the resulting polymer. Polymers resulting from vinylic amides are known to complex with iodine, with PVP-I being the most well-known and studied.

It was discovered by the present inventors that adding PVP to the PA-I extrusion process results in the iodine being complexed between the amide groups from both the PA and PVP, thereby resulting in a PA-I-PVP complex/blend in which the iodine complex has different complexing energies depending on the specific amide group it is complexed to. This allows for the preparation of PA-I complex systems in which the iodine release profile can be tuned depending on the specific amide group present to give desired biocidal profiles. This also occurs when PVP-I is used as an iodine source, but by complexing the iodine with both the PA and PVP in the extrusion process, the process becomes simpler and lower in cost.

It has also been found that extruding a specific PA with iodine, iodine and PVP-I or iodine and PVP at the same overall iodine loading level results in different biocidal activity for the final extruded materials. This ability to fine-tune both mechanical/physical properties and biocidal properties in a simple one-step process is a further benefit of the invention. Whereas PVP and polyvinylcaprolactam are specifically mentioned in this invention, the general class of polyacrylamides is envisaged to have a similar behavior and characteristics when being blended with PA's during the formation of PA-I complexes.

Iodine is the heaviest of the stable halogens and has a melt temperature of 114 °C and a boiling temperature of 184 °C. Iodine is manufactured primarily via mining or brine purification, with Chile and Japan being the two largest producing countries. Elemental iodine (I) is typically used as a disinfectant as either the element or as a solution. The solutions generally consist of the water-soluble triiodide anion I₃- iodine that is produced *in situ* by the addition of iodide to the poorly soluble elemental iodine. The reaction is reversible so that very small amounts of free iodine are produced that is responsible for its biocidal activity. The antimicrobial action of iodine is quick, non-specific and works at low concentrations and thus is used as a biocidal agent in many health care and operating applications.
Iodine is also the heaviest essential mineral nutrient needed for good human health. Iodine and its compounds are primarily used for nutrition. Iodine is essential in the synthesis of thyroid hormones and iodine deficiency affects about 2 billion people and is the leading preventable cause of intellectual disabilities. Iodine and its compounds are added to a number of everyday foods, which include: salt (iodized salt) and bread. Iodine is also a non-toxic radiocontrast material and has a growing use in healthcare imaging. Thus, iodine is both an effective biocidal agent and needed essential nutrient that is naturally occurring.

PVP-I was introduced to the pharmaceutical market as an antiseptic agent in the 1950's and is made by complexing polyvinylpyrrolidone (PVP) with iodine (I). The PVP-I material is a stable complex that has similar broad-spectrum activity against microorganisms as iodine, but is less irritating and toxic. The poison label required for iodine products is not necessary for preparations containing PVP-I and commercial solution and salve-based formulations are readily available over the counter (OTC product). It is sold under a number of brand names including Betadine. Solutions of PVP-I are non-irritating and non-sensitizing and cause no pain when applied to wounds or mucous membranes. PVP-I solutions can be used as a mouth rinse resulting in no staining or negative side effects. The broad-spectrum biocidal activity is especially effective at treating mixed infections.

According to the invention, a PA-I complex is formed via a similar mechanism as the PVP-I complex. In both cases, the iodine strongly associates and complexes with the amide functionality within the polymer. For PA, this complexation occurs via the polymer backbone whereas for PVP it occurs via the pendant pyrrolidone ring. 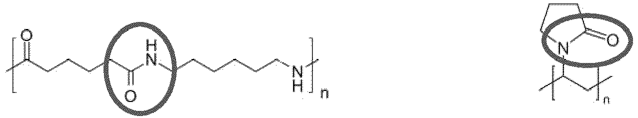 However, due to the differences in the chemical structure, the actual iodine complexation strength between the PA and PVP amide groups is not exactly the same. This complexation strength has a direct effect on the biocidal profile and activity. For this reason, it may be desirable to form the PA-I complex from different iodine sources. Depending on the PA-I, PA-I-PVP-I or PA-I-PVP complex, the biocidal activity can be fine-tuned to have varying biocidal activity at the same iodine loading.

PVP-I can be used as an additional iodine source due to the fact that the inventors have found that the PVP-I complex forms miscible polymer blends with nylons. The materials can be coextruded to give a single-phase structure in which one glass transition temperature is observed for the resultant homogeneous PA-PVP-I polymer blend. The coextrusion of the PVP-I with PA forms a completely miscible polymer blend, which possesses new material properties, is homogeneous and inherently biocidal throughout the entire polymer matrix.

The PA-I extruded materials are expected to have similar broad-spectrum biocidal activity to the water-soluble PVP-I complex. PVP-I solutions are active against: bacteria, bacterial spores, yeast, mold, fungi, viruses and bacteriophages. PVP-I materials shows broader biocidal activity than other antibacterial agents such as benzalkonium chloride and chlorhexidine. Unlike many antibiotics, there has been no bacterial resistance observed for PVP-I systems after more than 60 years of clinical use. PVP-I solution is active against methicillin-resistant *Staphylococcus aureus* (MRSA), *Klebsiella pneumoniae, Streptococcus pneumoniae, Hemophilus influenza, Pseudomonas aeruginosa* and *Legionella pneumophila* and readily inactivates the human immunodeficiency virus (HIV) and polio virus. PVP-I solutions demonstrate high virucidal efficacy against Avian influenza (Virology J., 2009: 6: 124), the Ebola virus and the vaccinia virus Ankara used as a reference virus to show virucidal activity against enveloped viruses (BMC Infect Dis., 2015; 15: 375).
A process of the invention and homogeneous blends obtainable thereby are not disclosed or suggested in the art.

It is known that nylon and PVP can be coextruded to give miscible blends. For example, US 5,399,431 and US 5,922,830 detail fiber production of PA systems with PVP to give homogeneous blends having unique mechanical properties. However, there is no mention concerning the compatibility of PVP-I with said PA systems or the mention or desire to obtain PA-I systems having biocidal properties by utilizing hot melt extrusion.

US 7,659,344 (published as US2007/0287803) relates to a composition comprising a polymer and PVP-I complex wherein the composition is melt extrudable at a temperature lower than about 230°C. Exemplary polymers include polyalkene, vinyl alcohol polymer, polyvinyl acetate, ethylene copolymer, ethylene copolymer with vinyl acetate, polyvinylidene chloride, polyvinyl chloride, or combinations of two or more thereof. The PVP-I:Polymer blends of US 7,659,344 are immiscible and not homogeneous on the molecular level. US 7,659,344 is completely silent about polyamides, let alone that it teaches or suggests a miscible polymer blend of polyamide and PVP-I as disclosed in the present invention. As is shown in the experimental section herein below, the extrusion process as carried out in US 7,659,344 does not give homogeneous blends. In contrast, heterogeneous blends are formed in which the PVP-I powder is entrapped within the polymer matrix. Importantly these materials showed no biocidal activity because the polymer matrix was responsible for coating, encasing and insulating the PVP-I powder. In turn, this led to the inactivation of the biocidal properties of PVP-I on account that the bacteria were not able to interact with the biocidal active PVP-I powder. It should also be noted that there is no mention of directly making the Polymer-iodine complex by extrusion. The reason is that the polymers detailed in US 7,659,344 do not have the ability to form Polymer-iodine complexes. When the systems are mixed with iodine as outlined in the present invention, the resulting Polymer-iodine systems are not complexed, are not stable and thus the iodine quickly migrates from the polymer matrix. This is also be further discussed in the experimental section.

US 2016/0369435 discloses an apparatus of fabricating iodine-based antimicrobial colored fabrics by the addition of PVP-I to various polymers. The general apparatus to conduct this fabrication is hot melt extrusion and is similar to US 7,659,344. However, again, there is no mention or realization that the blend system must result in miscible polymer blends with the PVP-I in order for the blend system to have any significant biocidal activity.

Another shortcoming of both US 2016/0369435 and US 7,659,344 is that the iodine source is only PVP-I powder and not elemental iodine. PVP-I powder is commercially obtained as a reddish-brown powder containing about 10% iodine. In order to obtain polymeric blend systems having acceptable polymer loading, iodine levels of 10-20% or higher need to be compounded with the polymer system in order to obtain an iodine loading of more than 1% in the final blend. Such high levels of PVP cause a significant deterioration of the bulk polymer mechanical and physical properties, which greatly reduces its performance attributes and for all practical purposes causes the systems to have little commercial acceptance.

PA-I complex systems are also known in the prior art, but in no instance are these produced by hot melt extrusion. US 6,312,705 discloses iodophor compositions of iodine complexed with nylon-4,6, nylon-6 or nylon-6,6. However, these PA-I complexes are formed by the immersion of said nylon in iodine solutions for up to 7 days, with common exposure times of more than 1 hour. The materials then need to be dried and then further processed. Although PA-I complexes can be made in such a manner, they have little commercial feasibility because of the long process times and incomplete complex formation. For example, for more hydrophobic PA's such as nylon-11 or nylon-6,12, there was no complexation or iodine uptake in solution because the PA systems were too hydrophobic. Also, any complex formation predominantly occurs at the iodine solution-nylon interface, with the interior regions of the nylon plastic showing minimal or irregular complex formation with iodine. This is to be expected since the nylon polymers are below both their glass and melt transitions and thus the PA-I complex formation is diffusion controlled in which contact time, PA chemical structure and moisture uptake greatly effects the PA-I complex formation making it next to impossible to control on a commercial scale.

Whereas iodine melts at 114 °C and boils at 184 °C, it has been discovered by the present inventors that elemental iodine can still be readily added to nylon base materials in the melt. The extrusion process is able to handle high pressures in which the iodine is melted, mixed and reacted to give the resultant PA-I complex. The reacted iodine after extrusion is bound and complexed to the PA structure, giving a PA-I complexed extrudable structure that is stable and inherently biocidal. One of the simplest ways to observe whether the PA-I complex is stable is to observe whether there is discoloration of the surrounding materials by the escape of free and uncomplexed iodine once the extrusion process has been completed. The PA-I systems provided in this invention show (i) no discoloration of surrounding materials; (ii) increased thermal stability as compared to the base ingredients; and (iii) a long lasting biocidal activity.

It should be noted that the compatible PA-PVP-I blends according to the present invention are compatible miscible polymer blends in which the PA and PVP-I chemical structures strongly interact with each other on the molecular level. These strong interactions generate domains that are macroscopically uniform, and result in a single-phase polymeric blend structure having only one glass transition temperature. Though such compatible blends are the exception, they are highly desirable because the resultant blends are completely homogeneous and behave as a single structure. The risk of phase separation of the various components is negligible and thus polymeric properties (physical, chemical and performance) are not compromised.

Generally, most polymer blends are immiscible, heterogeneous polymer blends in which two polymers are blended together and "forced" to interact. This is often accomplished by manufacturing a blend with components having very different melt morphologies. The addition of fillers (e.g. glass, graphite, etc.) is typically conducted in this manner. A wax-sand blend offers a simple analogy for such blends. One can melt the wax phase, physically add sand under mixing and then cool the wax-sand mixture to give a solid sand in wax blend. However, this is an immiscible blend, which upon heating will result in the rapid phase separation of both components. The blend is not homogeneous on the macroscopic level and distinct phases can be observed. There are only minimal chemical interactions between the components and thus generally the amounts of the filler added needs to be tightly controlled in order that the desired polymeric properties are not compromised.

An important advantage of the invention is that extruded PA-I complex systems are produced from components that are complexed with the PA, such as the elemental iodine, or additionally form miscible blends, such as the PVP-I and PVP during the extrusion process. These strong interactions with the PA base polymer limits the possibility for phase separation and leaching of iodine and other materials from the PA-I complex system. Further fine-tuning of the biocidal properties by complexing the iodine between polymers having different amide groups further enhances the ability adapt the biocidal profile for specific applications.

For example, PA-I complex systems can be produced in which the active iodine shows negligible leaching even in the presence of significant amounts of liquid (e.g. during washing), making the PA surface highly biocidal, but minimally effecting the surrounding areas. Such system would be especially suited for wound contact, where the PA-I surface remains biocidal to limit any bacterial growth or infections, but the normal cells and bacterial flora in the surrounding tissue needed for healthy wound repair are not affected. Thus, PA-I systems can be generated that have localized/surface biocidal properties, but do not interfere with the bulk healthy cells or bacteria metabolic processes that promote healthy wound healing. These same systems are less irritating and less likely to cause sensitization.

In addition, in-vitro studies have shown that aqueous PVP-I solutions, which is a water-soluble, iodine-amide complex system, were extremely effective against multi-drug resistant bacterial biofilms, fungal biofilms and fungal spores (Capriotti et al., Clin Res Dermatol Open Access, 5(1), 1-5, 2018). PVP-I was active against all five biofilm producing microorganisms, while ciprofloxacin (an antibiotic) was only able to eradicate one bacterial biofilm. The PA-I materials outlined in this invention are expected to have similar activity against biofilm formation, especially since the materials have a "focused" biocidal activity at the PA-I surface and the primary point where biofilm formation is expected to occur.

The invention can be put into practice using any type of raw materials that are used to make the PA-I complex in the melt. The preferred iodine source is elemental iodine because it isreadily available, can be easily handled in the extrusion process and the material forms a complex in its entirety with the PA's. Additional iodine-containing compounds such as iodides and iodates are also within the scope of this invention, but a significant amount of such iodine compound will not interact with the PA and may be considered as an unwanted side impurity (e.g. the corresponding metal of the iodide or iodate). It is also advantageous to use ingredients of bio-based origin when available and applicable. The elemental iodine used in this invention is generally of high purity due to the fact that iodine is easily purified via sublimation. Purity levels greater than 99% and 99.9% are readily available.

The PVP-I for use in the invention to make the PA-PVP-I blends can possess a broad range of available iodine content. The amount of PVP-I in a blend provided herein can vary according to specific needs, such as the biocidal strength and/or mechanical properties of the desired material.

The preferred level of iodine loading in a PA-I complex of the invention is between 0.1-10% by wt in the finished product. However, higher levels of iodine are possible if subsequent dilution is conducted when using, for example, a master batch. The 0.1-10% by wt iodine can be realized by using a combination of iodine sources, which includes at least elemental iodine, and optionally iodine salts and PVP-I. When using PVP-I, the preferable amount in the final PA-PVP-I blend or finished product is in the range of 1-30% by wt, more preferably in the range of 1-20% by wt. Higher levels of incorporation of PVP-I are possible and not out of the scope of this invention, however the mechanical properties of the PA-PVP-I materials becomes highly compromised and the material becomes more like PVP-I in its characteristics (e.g. slippery when wet, leaching of the PVP-I from the PA matrix). However, there may be cases that this is desired in the production for example of slippery coatings, where the PA-PVP-I is being "attached" to a substrate in which the bulk matrix is responsible for the mechanical integrity and the PA-PVP-I coating is mainly applied for both its lubricious properties and biocidal activity (e.g. a biocidal, slippery coating).

For example, elemental iodine can be from 0.1%, or about 0.5%, or about 1% or about 5% to about 15% or about 10% based on the weight of PA complex. PVP-I can be from about 1%, or about 2%, or about 3% or about 5% to about 40% or about 30%, or about 20%, or about 15%, based on the weight of the PA blend. Both elemental iodine and PVP-I can be used in combination to deliver an overall iodine concentration from 0.1%, or about 0.5%, or about 1%, or about 5% to about 15%, or about 10%, based on the PA-I-PVP-I blend.

In one aspect, the PA-I complex comprises 0.1-15%, preferably 0.5-10% by weight elemental iodine. In another aspect, the PA-PVP-I blend comprises 1-40% by weight, preferably 2-30 % by weight, of PVP-I. In another aspect, the PA-I-PVP-I blend comprises a total iodine content of 0.1-15%, preferably 0.5-10% by weight realized by a mix of elemental iodine and PVP-I. Alternatively or additionally, the (biocidal) properties can further be tailored according to needs by the addition of PVP to the extrusion process which includes PA and elemental iodine and PVP-I. Iodine is obtained in pure form and thus is simple to add in the desired amounts to give the PA-I complex. However, the iodine content in the PVP-I complex can vary greatly depending on the PVP-I source. Any PVP-I materials having 1-25% available iodine and 2-45% total iodine can be used to make the PA-I complex blends, with the actual PVP-I material used depending on desired physical/chemical and biocidal properties in the resultant PA-I system. Total iodine is determined by combining the "available iodine" with the "iodide ion". Available iodine can be determined via titration of the PVP-I with sodium thiosulfate and iodide ion via titration via silver nitrate. The exact methods are detailed in the United States Pharmacopeia USP-NF monograph for povidone-iodine.

The production of such PVP-I complexes is known in the art, and outlined for example in US 2,706,701 and US 2,900,305 and patents related thereto. The PVP precursor for making a PVP-I complex can be vinyl pyrrolidone homopolymers or copolymers having a K-value in the range of 10-60. A preferred PVP-I material to use for the production of PA-PVP-I blends is the PVP-I defined in the USP, EP and JP pharmacopeias having available iodine content of 9.0-12.0%, an iodide ion of maximum 6.6% and a nitrogen content of 9.5-11.5% and which utilizes a precursor vinylpyrrolidone homopolymer of about K-value 20-30. This grade PVP-I is widely accepted, listed on the WHO's List of Essential Medicines, has a long use record, and is readily available. The use of PVP-I's with higher iodine content are also within the scope of this invention.

A polyamide (PA) for use in the present invention can be any macromolecule with repeating units linked by amide bonds. Polyamides can be natural and/or synthetic based. Synthetic based polymers can be made from natural and/or synthetic based building blocks. Examples of naturally occurring polyamides are proteins, such as wool and silk. Artificially made polyamides can be made through step-growth polymerization or solid-phase synthesis yielding materials such as nylons, aramids, and sodium poly(aspartate). Polyamides (PAs) are produced either by the reaction of a diacid with a diamine or by ring-opening polymerization of lactams. They can be aliphatic, semi-aromatic or fully aromatic thermoplastics. The aromatic polyamides, called aramids, have higher strength, better solvent, flame and heat resistance and greater dimensional stability than the all aliphatic amides (Nylon) but are more expensive and more difficult to produce. Synthetic polyamides are commonly used in textiles, automotive applications, carpets and sportswear due to their high durability and strength.

In one embodiment, the invention uses PA selected from the group consisting of an aliphatic polyamide, a nylon, a semi-aromatic polyphthalamide and aromatic aramide, or any mixture thereof. For example, the PA is selected from the group consisting of Polyamide 6, Polyamide 11, Polyamide 12, Polyamide 5-10, Polyamide 6-6, Polyamide 6-9, Polyamide 4-10, Polyamide 6-10, Polyamide 6-12, Polyamide 10-10, Polyamide 10-12, Polyamide 4-6 and Polyamide 12-12.

In one embodiment, PA is polyamide 6 (poly(hexano-6-lactam)), also known in the art as polycaprolactam, nylon 6, PA6, poly-ε-caproamide, Perlon, Dederon, Capron, Ultramid, Akulon, Nylatron, Kapron, Alphalon, Tarnamid, Akromid, Frianyl, Schulamid, Durethan, Technyl or Nyorbits. It is produced by the ring-opening polymerization of caprolactam.

In another embodiment, PA is Polyamide 11 (PA 11) or Nylon 11, a member of the nylon family of polymers. It is produced from castor beans by Arkema under the trade name Rilsan. It is produced by polymerization of 11-aminoundecanoic acid.

In yet another embodiment, PA is Polyamide 6-6 (PA66) or Nylon 66, a member of the nylon family of polymers. It is produced by the polymerization of hexamethylenediamine with adipic acid. It is marketed by a number of companies under the trade names Ultramid, Vydyne, Capron, Zytel, Maranyl, Akromid, Durethan or Frianyl. Nylon 66 is often used for fiber production and sold under such names as Nilit and Cordura.

In a still further embodiment, PA is Polyamide 12 or Nylon 12, a member of the nylon family of polymers. It is produced either by the condensation reaction of 12-aminododecanoic acid or the ring-opening polymerization of laurolactam. Nylon 12 is mainly used for films for packing material in the food industry and sterilized films and bags for the use in the pharmaceutical and medical fields. It can also be used for a coating on metal surfaces. The material is sold under the trade names of Daiamid, Grilamid, Rilsan A, UBE Nylon 12 or Vestamid.

Though the aromatic and semi-aromatic polyamides may be used in the present invention, the high processing temperature of such aromatic aramids requires significantly higher extrusion temperatures to produce the PA-I complex when compared to aliphatic, nylon-based PA's. The high extrusion temperatures needed to produce the PA-I complex when using polyphthalamide and aramids result in significant difficulties in producing stable PA-I systems. For this reason, PA aliphatic nylons are especially suited for the making of the PA-I complex blends since these PA's melt at lower temperatures and the melt blending can be conducted at lower extrusion temperatures that limits the risk of degradation. In addition, the aliphatic nylons are the most widely used and available PA's.

A method of the invention may involve the addition of other plasticizer(s), small molecule(s), polymer(s) and/or biocidal agent(s) to the hot melt extrusion process to modify resultant mechanical properties and/or biocidal activity of the resulting PA-I blend. The preparation of co-blends of the PA-I complexes with other polymers or natural fibers is therefore also within the scope of this invention. Whereas the invention specifically discloses miscible blends with PVP-I and/or PVP, other polymers or natural fiber blends are within the scope of this invention because all systems rely on the benefit of the biocidal properties resulting from the base PA-I system. PA-I blends with both natural and synthetic fibers include natural fibers of cotton and wool, and the synthetic fibers of polyester and spandex.

Therefore, a method according to the invention suitably comprises mixing PA with a suitable source of iodine and one or more further polymer(s), small molecule(s), additives(s), plasticizer(s), biocidal agent(s) and/or antibiotic(s). The use of one or more further polymers may contribute to the mechanical properties of the resulting biocidal material. In one embodiment, the further polymer is PVP. For example, a very good biocidal material may be obtained with a blend comprising about 80-95 wt% PA, about 1-10 wt% I, and about 4-10% PVP, providing that the sum of PA, I and PVP is 100wt%. Other advantageous blends include polymers that are blended with PA's and which include, but are not limited to: other polyamides, polyvinyl chloride, polyvinylidene chloride, polyurethanes, polyalkenes, ABS (acrylonitrile butadiene styrene), styrene-isobutylene copolymer, polyethyleneglycol, polyvinylalcohol, methacrylate/acrylate polymers, ionomers, cellulose acetate, polystyrene and polyalkene styrenics. For a good overview of possible PA blend systems can be found in the book "Commercial Polymer Blends" by L.A. Utracki (1998), publisher Springer US. Also included in the invention are polymer nanocomposites in which nano-sized particles are added to the PA-I systems to effect material properties. These nano-sized particles or nanofillers can include, but are not limited to: clays, graphite, glass, silicates, titanium dioxide, carbon black, carbon fibers and modified montmorillonite.

The incorporated of one or more further biocidal agents may contribute to enhancing the biocidal properties of the resulting biocidal material. This addition of one or more further biocidal agent may further enhance biocidal rate and/or activity against specific microorganism strains while still possessing the broad-spectrum biocidal activity of the PA-I system. Other biocidal agents include: silver, copper, gold, zinc metals and their salts; quaternary amino compounds (e.g. benzalkonium chloride and cetylpyridinium chloride); phenols and cresols; halophenols (e.g. p-chloro-m-xylenol); biguanides (e.g. chlorhexidine); anilides (e.g triclocarbon) and triclosan.

A further aspect of the invention relates to the ability of the PVP polymer to not only complex with iodine, but its ability to solubilize and/or compatibilize various ingredients that would otherwise not be compatible with the PA alone. The PVP material can help enhance the compatibility of the final PA-I-PVP system containing one or more further polymer(s), biocidal agent(s), small molecule(s) and/or plasticizer(s).

A further aspect of the invention relates to the ability of the PA-I blends to possess the property of radiopacity. Radiopacity is the property of showing opacity to the radio wave and X-ray portion of the electromagnetic spectrum: that is, the relative inability of electromagnetic radiation in this range to pass through the material. The property of radiopacity is caused by the incorporation of iodine in the PA-I blend and can be a very desirable trait to enhance the visualization of the PA-I containing medical device during implementation in the host.

A further aspect of the invention relates to a method for providing a PA-I complex herein disclosed. In one embodiment, the method comprises dry-mixing a powdered polyamide with elemental iodine and powdered polyvinylpyrrolidone-iodine complex, and optional further ingredients, followed by solubilizing the mixture to form a compatible blend. Solubilization can for instance be done by using a solvent or by melting the ingredients of the mixture. In a preferred embodiment, the method comprising subjecting a blend to a hot melt extrusion process. The PA-I can be made by melt extruding PA with I, or I and PVP-I mixtures to give the PVP-I complex occurring in the melt extrusion processing. The addition of additional compatible polymers such as PVP can also be employed with multiple ingredient compositions generating unique PA-I complex blends. The main drivers for choosing the actual process to make the PA-I blend is ease of manufacture, availability of raw materials and safety of process. In a specific aspect, the blend is used as a master batch that is further processed to a given product. The hot melt extrusion process may comprise the use of a multiple screw extruder. Preferably, the temperature in the mixing zones of the extruder is in the range of from 150°C to 250°C, more preferably wherein the multiple screw extruder is operated at 300 to 500 rpm, e.g. about 400 rpm. In a specific aspect, a twin screw extruder having 16 mm screw diameter and 25 cm barrel length is used. Preferably, the extruding barrel has multiple, e.g. five or more, heating zones.

It is noted that the short-hand abbreviations used in this invention such as "PA-I" refer to the base iodine complex, which may or may not include other components. As already stated earlier, the driver for the invention is the ability to make stable extruded PA-I systems that are mainly being prepared for their biocidal properties. When specific polymers are also included in the extruding process, then these may also be included in the abbreviation (e.g. PA-I-PVP). However, it should be noted that during the extrusion process, all ingredients and complexing are homogenized throughout the entire resultant PA-I product. The abbreviation order is not meant to indicate any chemical order, but just an ingredient list that is responsible for the resultant PA-I complex. The resultant PA-I structure is a homogeneous blend in which all ingredients and iodine complexing is uniformly distributed throughout the product.

Another advantage of the PA-I materials of this invention is that the systems are produced from readily available starting materials having excellent cost structure. The starting materials have a low environment "footprint" because most of the PA-I material can be recycled, with the materials degraded to their basic monomer units and then captured for reuse in new polymer production. Many of the PA's can also be manufactured from renewable resources. In addition, the same technologies used for present PA product manufacture (e.g. melt extrusion, injection molding) are the same technologies used for the production of PA-I materials. Due to the readily available materials, low environmental "footprint", good price structure and ease of manufacture, the PA-I materials of this invention are expected to have broad product potential and customer acceptance. For this reason, the PA-I materials of this invention are expected to have broad use applications even for market segments that are highly cost sensitive. Such products include, but not limited to: water filters; air filters used in air purification, heating and air conditioning; building materials; carpets; bath and kitchen towels and wipes; baby seats; baby toys; tables; cutting blocks; chair rests; shoe inserts; upholstered goods; containers and food packaging.

A further embodiment relates to the use of a compatible blend according to the invention in the manufacture of a biocidal material. For example, the biocidal material is active against bacteria, viruses, yeasts, fungi, mold, spores and/or protozoa.

As will be appreciated by a person skilled in the art, the applications of the PA-I blends obtained via extrusion outlined in this invention are vast. In theory, any potential use application that presently utilizes PA could be a potential use application for the PA-I materials and includes base materials, components and coatings. Exemplary uses are in the area of industrial, construction, consumer, pharmaceutical, health, veterinarian and aquatic markets.

Applications that will especially benefit from this invention are applications that desire: reduced risk of microbial contamination, reduced risk of microbial growth, reduced risk of the spread of microbial contamination and/or the inactivation of viruses. For this reason, the PA-I blends provided herein have broad applications in various industrial, consumer, pharmaceutical, health, veterinarian and aquatic markets. Exemplary products include filters (both wet and dry; e.g. air filters for improved air quality and mouth caps for the protection of individuals from the spread of pathogenic microbes and viruses), tooth brush bristles, equipment or device housing (e.g. toothbrush body), sutures, garments, curtains (e.g. window or shower), blankets, hard surface coatings (e.g. utensils, operating tables), dentistry articles (e.g. aspirators, tubes, sutures, etc.), building materials (e.g. hospital isolation rooms), construction materials, carpets, medical devices, wound coating gauze, light switches, door handles, operating and endo-scopes, catheters, tubes, breathing tubes, endotracheal tubes, intravascular catheters, deep intravenous lines, shoes and shoe liners, sponges, cutting planks, masks, syringe housings, hospital containers, synthetic sheets and covers, food and device packaging, countertops, flexible surface coatings, key boards, upholstery, plates, diapers, tissues, handkerchiefs, fasteners and flooring.

### LEGEND TO THE FIGURES

Figure 1: Clearing zone studies of PA:PVP-I (80:20) pellets with *Staphylococcus aureus.* Right hand panel shows a magnification of the area comprising the pellets.
Figure 2: Clearing zone studies of PA:PVP-I (80:20) pellets with *Aspergillus brasiliensis.* Right hand panel shows a magnification of the area comprising the pellets.
Figure 3: Clearing zone studies of PA:PVP-I (80:20) pellets with *Candida albicans.* Right hand panel shows a magnification of the area comprising the pellets.

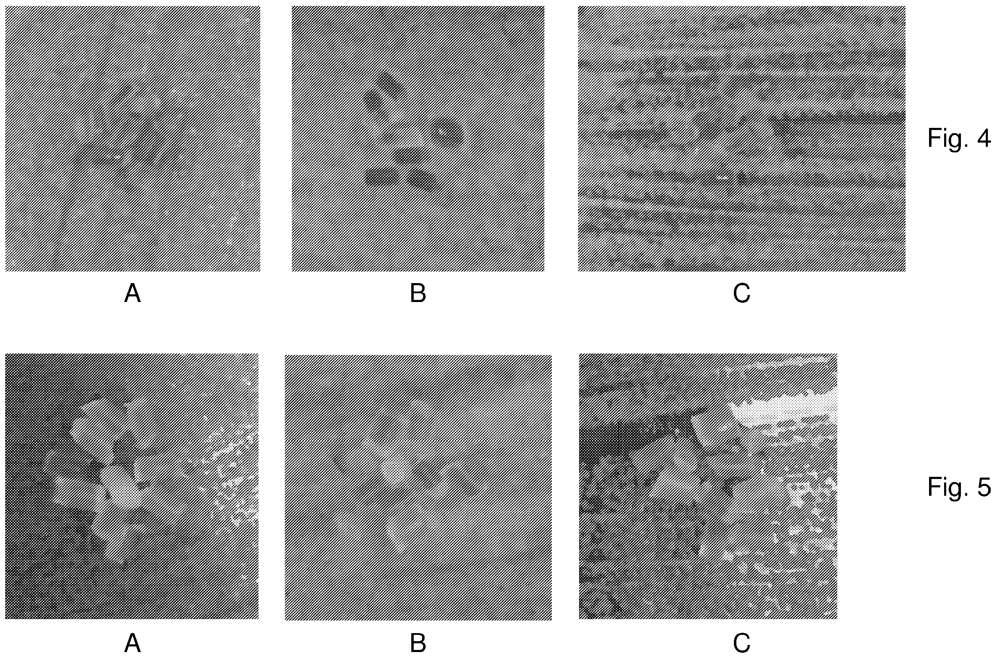

Figure 4: Clearing zone studies of PA:PVP (80:20) pellets with (A) *Staphylococcus aureus, (B) Aspergillus brasiliensis* or (C) *Candida albicans* (comparative example).
Figure 5: Clearing zone studies of PA pellets with (A) *Staphylococcus aureus, (B) Aspergillus brasiliensis* or (C) *Candida albicans* (comparative example).
Figure 6: Clearing zone studies of PA-I sample strands from Example 2 with *(A) Staphylococcus aureus* - common strain or (B) *Staphylococcus aureus -* MRSA resistant strain.
Figure 7: (left hand side) PP-I extruded material, Comparative Sample 34, and (right hand side) PA-I complex, Sample 27, of the invention in sample bags after extrusion.

### EXPERIMENTAL SECTION

### Extrusion studies and thermal analysis:

The raw materials used were Polyamide 6 (PA6; Lanxess Durethan^{®} 29), elemental iodine 99.8% purity (Sigma Aldrich/Merck), personal care grade PVP K30 having K-value of 30 (Boai NKY Pharmaceuticals Ltd. PolyViscol^{™} K30), Polyamide 11 (Sigma Aldrich/Merck), Polyamide 12 (Sigma Aldrich/Merck), Polyamide 6,6 (Sigma Aldrich/Merck), polypropylene and EP pharmaceutical grade PVP-I (Boai NKY Pharmaceuticals Ltd. KoVidone^{®}-I) having an available iodine content from 9-12%. If required, larger granule polymers were milled before use and used without additional drying. The iodine was ground into a fine powder before use. Both PVP K30 and PVP-I were used as received. The powders blends were dry mixed in a mixer and then fed into the extruder.

400 Gram extrusion studies were conducted in a Thermo Prism Eurolab 16 twin screw extruder having 16 mm screw diameter and 25 cm barrel length. The extruding barrel had five heating zones that were set in the range of 150-240°C. The rotation speed of the screws was fixed at 400 rpm.

Differential Scanning Calorimetry (DSC) and Thermal Gravimetric Analysis (TGA) were conducted on Netzsch 204-F1 and TA instrument Q500, respectively.

The compatible PA-I complexes formed during the melt blending resulted in an extrudate in the form of a molten strand that was cooled and pelletized. All extrusion experiments were conducted under a nitrogen atmosphere. The pellets or cooled strands were used "as is" in subsequent bacterial growth studies. The following table is a summary of the various extrusion experiments conducted.

### EXAMPLE 1: Extrusion Test Trial 1

Hot melt extrusion compounding studies were carried out with PA6 and PVP and PVP-I systems (not part of the invention as claimed).

The summary is outlined on the following Table 1

| **Sample** | **Wt. ratio of Ingredients** | | | **Biocidal Activity** | **Observations** |
|---|---|---|---|---|---|
| | **PA6** | **PVP** | **PVP-I** | | |
| 1 | 99 | 1 | -- | - | Miscible blend |
| 2* | 95 | 5 | -- | - | Miscible blend |
| 3* | 90 | 10 | -- | - | Miscible blend |
| 4* | 80 | 20 | -- | - | Miscible blend |
| 5* | 70 | 30 | -- | - | Miscible blend |
| 6* | 60 | 40 | -- | - | Miscible blend |
| 7* | 50 | 50 | -- | - | At the limit of mechanical properties |
| 8 | 99 | -- | 1 | + | Miscible blend |
| 9 | 95 | -- | 5 | + | Miscible blend |
| 10 | 90 | -- | 10 | + | Miscible blend |
| 11 | 80 | -- | 20 | + | Miscible blend |
| 12 | 75 | -- | 25 | + | Miscible blend |
| 13 | 70 | -- | 30 | + | Reaction of iodine with cooling bath |
| 14 | 90 | 5 | 5 | + | Miscible blend |
| 15 | 80 | 10 | 10 | + | Miscible blend |
| 16* | 100 | -- | -- | - | control |

| | | | | | |
|---|---|---|---|---|---|
| * Reference/comparative sample | | | | | |

As can be derived from the results in Table 1 above, compatible blends were obtained up to 40 w% PVP addition in which the PA-PVP blend could still be extruded to give a fiber that did not break. Above 40w% PVP, the blend is still compatible, but the mechanical properties are greatly compromised. For biocidal PA-PVP-I blends, the upper limit of PVP-I incorporation was about 25 weight %. Whereas the mechanical properties were still acceptable, the water-cooling bath seemed to react and discolor the resultant PA-PVP-I fiber. It is expected that incorporation of an increased amount PVP-I would be possible if an alternative cooling system is employed.

The following Table 2 gives a summary for the DSC and TGA analysis of samples 10 and 11.

| **Sample** | **DSC*** | | | **TGA (°C)** | | |
|---|---|---|---|---|---|---|
| | | | | | | |
| | Melt Temp Tₘ (°C) | Melt Enthalpy ΔH (J/g) | Cryst. Temp T_{c} (°C) | Temp @ 5% wt loss | Initial start of decomp. | Onset temp. of decomp. |
| 100% PA6 (reference 16) | 222 | 75.5 | 186 | 383 | 292 | 416 |
| PA6/10% PVP-I (sample 10) | 217 | 68 | 181 | 344 | 286 | 385 |
| PA6/20% PVP-I (sample 11) | 209 | 53 | 169 | 324 | 272 | 365 |

| | | | | | | |
|---|---|---|---|---|---|---|
| * Aluminum DSC pans used for DSC analysis | | | | | | |

As can be seen in Table 2, the resultant DSC and TGA analysis show the resultant materials are stable and homogeneous. Increasing incorporation of the amorphous PVP-I causes a decrease in the both the melt temperature and melt enthalpy, showing the polymers are behaving as miscible blends. Biocidal activity was realized for samples compounded with PVP-I and not PVP alone.

### EXAMPLE 2: Extrusion Test Trials 2

The following table 3 is a summary of the various extrusion experiments conducted.

| **Sample** | **Wt. ratio of Ingredients** | | | | **Total Iodine** | **Biocidal Activity** | **Observations** |
|---|---|---|---|---|---|---|---|
| | **PA6** | **I** | **PVP** | **PVP-I** | | | |
| 17 | 95 | -- | -- | 5 | 0.5 % | + | Miscible blend |
| 18 | 92.5 | 2.5 | -- | 5 | 3.0 % | + | Miscible blend |
| 19 | 90.5 | 4.5 | -- | 5 | 5.0 % | + | Miscible blend |
| 20 | 85.5 | 9.5 | -- | 5 | 10 % | + | Miscible blend |
| 21 | 81 | 9 | -- | 10 | 10% | + | Miscible blend |
| 22 | 95 | 5 | -- | -- | 5 % | + | Miscible blend |
| 23 | 93 | 5 | 2 | -- | 5 % | + | Miscible blend |
| 24 | 90 | 5 | 5 | -- | 5 % | + | Miscible blend |
| 25 | 85 | 5 | 10 | -- | 5% | + | Miscible blend |
| 26 | 85 | 10 | 5 | -- | 10 % | + | Miscible blend |
| 27 | 90 | 10 | -- | -- | 10 % | + | Miscible blend |

As can be derived from the results in table 3, all systems gave miscible blends, resulting in stable PA-I complexes. The iodine was tightly bound to the PA matrix with no iodine release or discoloration of surrounding materials. All PA-I complexes showed biocidal activity.

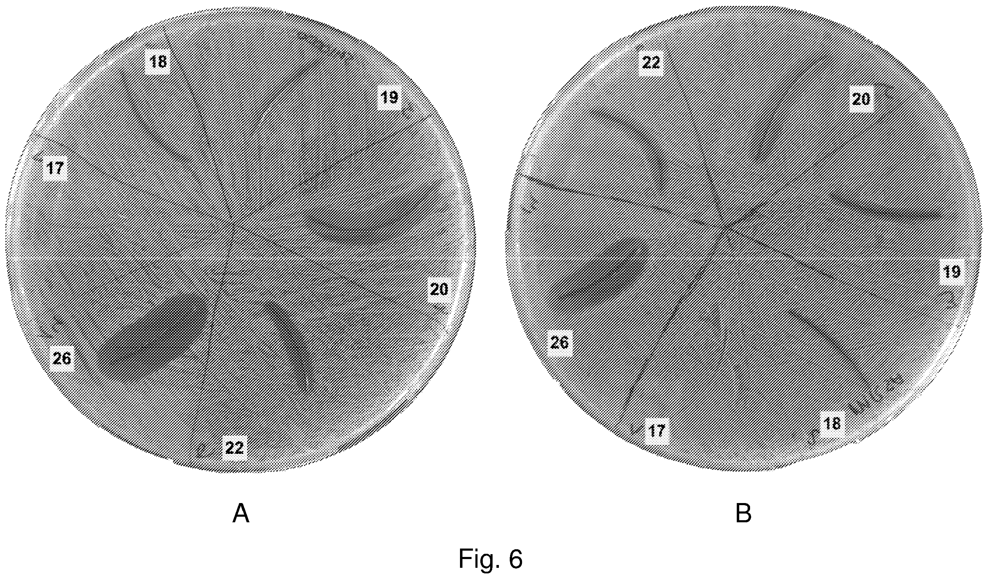

Clearing zone photos for a number of the samples are included in Figure 6 showing the PA-I systems show strong activity against both natural occurring and Methicillin-resistant strains of *Staphylococcus aureus.*

The following table 4 is a summary of thermal properties as determined by TGA and DSC for a number of the samples.

| **Sample** | **DSC*** | | | **TGA (°C)** | | |
|---|---|---|---|---|---|---|
| | | | | | | |
| | Melt Temp Tₘ (°C) | Melt Enthalpy ΔH (J/g) | Cryst. Temp T_{c} (°C) | Temp @ 5% wt loss | Initial start of decomp. | Onset temp. of decomp. |
| 100% PA6 (reference) | 220 | 71 | 165.5 | 383 | 292 | 416 |
| 18 | 211 | 69 | 170 | 340 | 288 | 392 |
| 19 | 207 | 64 | 164 | 321 | 280 | 380 |
| 20 | 202.5 | 58 | 158 | 318 | 269 | 378 |
| 22 | 206.0 | 66 | 165.0 | 336 | 279 | 387 |
| 23 | 214.5 | 74 | 176 | 352 | 258 | 397 |
| 24 | 204.5 | 58 | 162 | 316 | 266 | 381 |
| 25 | 199.0 | 53 | 156 | 327 | 268 | 381 |
| 26 | 198.5 | 55 | 154 | 297 | 266 | 361 |
| 27 | 203.5 | 64 | 161.5 | 319 | 280 | 374 |

| | | | | | | |
|---|---|---|---|---|---|---|
| * Pressurized steel pans used for DSC analysis. | | | | | | |

As can be seen from table 4, the resultant DSC and TGA analysis show the resultant PA-I materials are stable and homogeneous. The resultant stable PA-I blends can be directly molded into desired end products or can be further extruded with additional ingredients for final use.

### EXAMPLE 3: Extrusion Test Trials 3

Besides PA6, other base PA polymers were extruded to give the PA-I blends. The PA materials extruded in this example were Polyamide 11, 12 or 6,6. The following table 5 is a summary of the extruded materials.

| **Sample** | **Wt. ratio of Ingredients** | | | **Biocidal Activity** | **Observations** |
|---|---|---|---|---|---|
| | **PA** | **PVP-I** | **I₂** | | |
| 28 | 92.5 PA11 | 5 | 2.5 | + | Compatible blend |
| 29 | 97 PA12 | -- | 3 | + | Compatible blend |
| 30 | 95 PA6,6 | 5 | -- | + | Compatible blend |
| 31 | 92.5 PA6,6 | 5 | 2.5 | + | Compatible blend |

All extrusion reactions resulted in compatible blends on which the complexed iodine formed a stable complex within the PA matrix. All systems showed biocidal activity.

### EXAMPLE 4: Extrusion Test Trials 4 (comparative example)

Following the teaching described in US Patent 7,659,344, Polypropylene (PP) was extruded with PVP-I or with elemental iodine. The following Table 6 gives a summary of the results.

| **Sample** | **Wt. ratio of Ingredients** | | | **Biocidal Activity** | **Observations** |
|---|---|---|---|---|---|
| | **PP** | **PVP-I** | **I₂** | | |
| 32 | 95 | 5 | -- | - | Inhomogeneous blend |
| 33 | 90 | 10 | -- | - | Inhomogeneous blend |
| 34 | 97 | -- | 3 | Not tested | Unstable complex |
| | | | | | |

The extrusion of PP with PVP-I (samples 32 and 33) resulted in the physical mixing of the PVP-I powder within the melted PP matrix. Upon cooling, the resultant strands were rough and of poor mechanical integrity. The PVP-I powder structure could be visually detected as being embedded and encased on the PP matrix upon cooling, which resulted in two incompatible materials. Bacterial testing on these systems showed no biocidal activity.

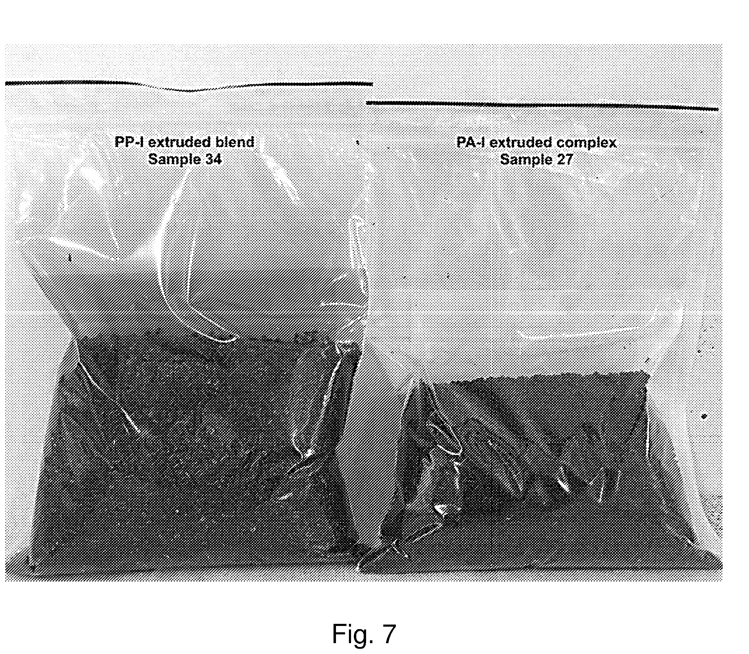

The direct extrusion of PP with elemental iodine resulted in a clearly visible unstable complex. Once the PP-I strands were obtained from the extrusion process, the material was granulated and placed in plastic bags for keeping. The surrounding materials become quickly colored due to the escaping iodine vapors. There was no complex formed and thus no stable PP-I complex could be produced. Figure 7 shows a photographic image of either the comparative PP-I material (Sample 34) or the PA-I complex (Sample 27; see Example 2) of the invention that were stored in plastic bags. Both materials were extruded at about the same time. The PP-I material immediately showed discoloration of surrounding materials, while the PA-I complexes of this invention remain stable and free of any color release after immediate production and over time, even though the total iodine loading was more than 3x the amount as for the PP system, 10% and 3%, respectively.

### EXAMPLE 5: Bacterial Tests

In this example, the biocidal activity of a representative PA-I blend (Sample 11) was determined using clearing zone studies of PA-PVP-I (80:20) pellets with either *Staphylococcus aureus* (Gram+ bacteria), *Aspergillus brasiliensis* (fungus) or *Candida albicans* (yeast).

### Bacterial Test 1: Clearing zone studies with S. aureus.

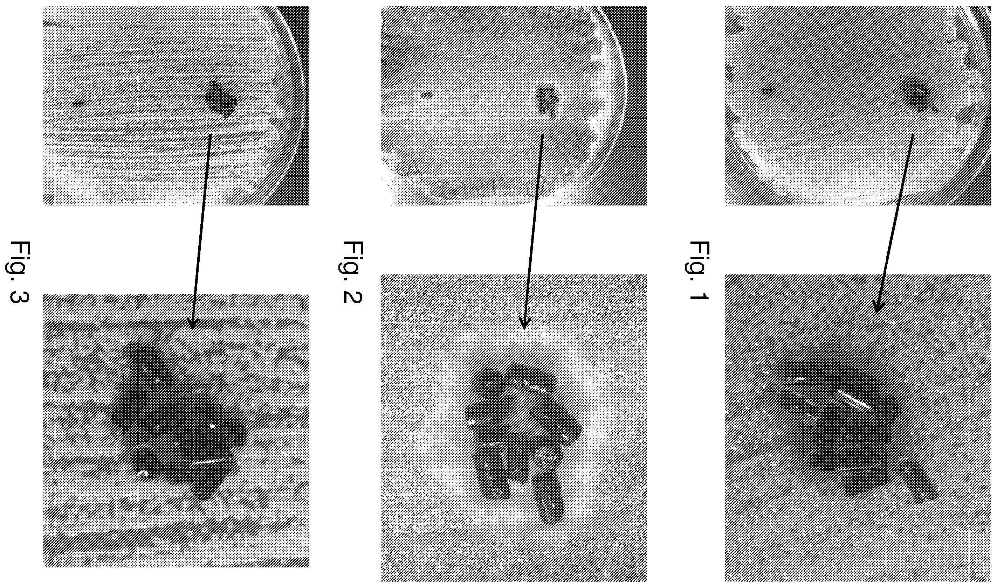

A suspension of 10⁶ cfu/ml *S. aureus* was prepared. The suspension was then used to inoculate TSA and SDA agar by dipping a cotton swab in the test suspension and rubbing the swab against the agar plates. After the suspension treatment, the PA-PVP-I (80:20) pellets were transferred on the plates and the plates incubated. Clearing zones were observed after 2 and 4 days around the pellets. Figure 1 shows the PA-PVP-I pellets (80:20) after 4 days incubation. Biocidal activity was observed for the PA-PVP-I pellets.

### Bacterial Test 2: Clearing zone studies with A. brasiliensis.

A suspension of 10⁶ cfu/ml A. *brasiliensis* was prepared. The suspension was then used to inoculate TSA and SDA agar by dipping a cotton swab in the test suspension and rubbing the swab against the agar plates. After the suspension treatment, the PA-PVP-I (80:20) pellets were transferred on the plates and the plates incubated. Clearing zones were observed after 2 and 4 days around the pellets. Figure 2 shows the PA-PVP-I pellets (80:20) after 4 days incubation. Biocidal activity was observed for the PA-PVP-I pellets.

### Bacterial Test 3: Clearing zone studies with C. albicans.

A suspension of 10⁶ cfu/ml *C. albicans* was prepared. The suspension was then used to inoculate TSA and SDA agar by dipping a cotton swab in the test suspension and rubbing the swab against the agar plates. After the suspension treatment, the PA-PVP-I (80:20) pellets were transferred on the plates and the plates incubated. Clearing zones were observed after 2 and 4 days around the pellets. Figure 2 shows the PA-PVP-I pellets (80:20) after 4 days incubation. Biocidal activity was observed for the PA-PVP-I pellets.

### Bacterial Test 4: Reference Sample 4 clearing zone studies of PA:PVP (80:20) pellets.

Suspensions of 10⁶ cfu/ml *S. aureus, A. brasiliensis* and *C. albicans* were prepared. The suspensions were then used to inoculate TSA and SDA agar by dipping a cotton swab in the test suspension and rubbing the swab against the agar plates. After the suspension treatment, PA-PVP (80:20) pellets were transferred on the plates and the plates incubated. Clearing zones were not observed after 2 and 4 days around the pellets. Figure 2 shows the PA-PVP pellets (80:20) after 4 days incubation. The PA-PVP pellets did not have any biocidal activity against these microorganisms.

### Bacterial Test 5: Reference Sample 16 clearing zone studies of PA pellets.

Suspensions of 10⁶ cfu/ml *S. aureus, A. brasiliensis* and *C*. *albicans* were prepared. Each of the suspensions were then used to inoculate TSA and SDA agar by dipping a cotton swab in the test suspension and rubbing the swab against the agar plates. After the suspension treatment, PA pellets were transferred on the plates and the plates incubated. Clearing zones were not observed after 2 and 4 days around the pellets. Figure 2 shows the PA pellets after 4 days incubation. Clearly, PA pellets did not have any biocidal activity against these microorganisms.

### EXAMPLE 6: Biocidal activity of extruded strands of PA-I against natural strain or Methicillin-resistant strain (MRSA) S. aureus.

Suspensions of a natural strain or a Methicillin-resistant strain of *Staphylococcus aureus* were inoculated on agar plates. After treating the plates, extruded strands of PA-I blends with increasing iodine content (samples 17, 18, 19, 20, 22 and 26 of Example 2) were placed on the plates and incubated. All samples were found to be biocidal, with the PA-I samples containing higher levels of iodine loading showing larger clearing zones.

## Claims

1. A method for providing a biocidal polyamide-iodine (PA-I) blend comprising mixing polyamide (PA) with a suitable source of iodine (I) comprising elemental iodine and optional further ingredients, followed by solubilizing the mixture by subjecting the mixture to a hot melt extrusion process to obtain in a homogeneous blend in which all ingredients are uniformly distributed throughout the polyamide-iodine complex matrix.

2. The method of claim 1, wherein the blend comprises a PA-I complex comprising 0.1-15%, preferably 0.5-10% by weight of elemental iodine.

3. The method according to claim 1 or 2, wherein the source of iodine further comprises one or more of iodide and iodate salts, polyvinylpyrrolidone-iodine (PVP-I), and mixtures thereof.

4. The method according to claim 3, wherein the iodine source is a mixture of elemental iodine and PVP-I.

5. The method according to any one of claims 1- 4, wherein the PA is an aliphatic polyamide, a nylon, a semi-aromatic polyphthalamide and aromatic aramide, or any mixture thereof.

6. Method according to claim 5, wherein PA is selected from the group consisting of Polyamide 6, Polyamide 11, Polyamide 12, Polyamide 5-10, Polyamide 6-6, Polyamide 6-9, Polyamide 4-10, Polyamide 6-10, Polyamide 6-12, Polyamide 10-10, Polyamide 10-12, Polyamide 4-6 and Polyamide 12-12, preferably Polyamide 6, Polyamide 11, Polyamide 12, and Polyamide 6-6.

7. Method according to any one of the preceding claims, comprising mixing PA with the suitable source(s) of iodine and one or more further polymer(s), additives(s), plasticizer(s), biocidal agent(s) and/or antibiotic(s).

8. Method according to any one of the preceding claims, wherein the hot melt extrusion process comprises the use of a multiple screw extruder, preferably wherein the temperature in the mixing zones of the extruder is in the range of from 150°C to 260°C, more preferably while operating the multiple screw extruder at 300 to 500 rpm.

9. A homogenous PA-I blend obtainable by a method according to any one of the preceding claims, comprising at least 0.5 wt% iodine.

10. The PA-I blend according to claim 9, comprising 60-99% wt% polyamide.

11. A composition comprising a homogeneous PA-I blend according to claim 9 or 10, and one or more further polymer(s), additives(s), plasticizer(s), biocidal agent(s) and/or antibiotic(s).

12. A composition according to claim 11, comprising one or more of the following biocidal agents: silver, copper, gold, zinc metals and their salts; quaternary amino compounds ; phenols and cresols; halophenols ; biguanides ; anilides and triclosan.

13. The use of a PA-I blend according to claim 9 or 10, or a composition according to any one of claims 11-12 in the manufacture of a biocidal material, preferably wherein said biocidal material is active against bacteria, viruses, yeasts, fungi, mold, spores and/or protozoa.

14. A biocidal product comprising a PA-I blend according claim 9 or 10, or a composition according to any one of claims 11-12.

15. The biocidal product according to claim 14, selected from the group consisting of air filters, water and solution filters, mouth caps, tooth brush bristles, equipment or device housing, sutures, garments, curtains, blankets, hard surface coatings, dentistry articles, building materials, construction materials, carpets, medical devices, wound coating gauze, light switches, door handles, operating and endo-scopes, catheters, tubes, breathing tubes, endotracheal tubes, intravascular catheters, deep intravenous lines, shoes and shoe soles, sponges, cutting planks, masks, syringe housings, hospital containers, synthetic sheets and covers, food and device packaging, countertops, flexible surface coatings, key boards, upholstery, plates, diapers, tissues, handkerchiefs, fasteners and flooring.

## Patentansprüche

1. Verfahren zum Bereitstellen eines bioziden Polyamid-Jod-(PA-I)-Gemischs, umfassend Mischen von Polyamid (PA) mit einer geeigneten Quelle von Jod (I), umfassend elementares Jod und optional weitere Bestandteile, gefolgt von Solubilisieren der Mischung, durch Unterziehen der Mischung einem Heißschmelzextrusionsverfahren, um ein homogenes Gemisch zu erhalten, in dem alle Bestandteile gleichmäßig über die gesamte Polyamid-Jod-Komplex-Matrix verteilt sind.

2. Verfahren nach Anspruch 1, wobei das Gemisch einen PA-I-Komplex umfasst, umfassend 0,1-15 Gew.-%, vorzugsweise 0,5-10 Gew.-% elementares Jod.

3. Verfahren nach Anspruch 1 oder 2, wobei die Quelle von Jod ferner eines oder mehrere von Jodid- und Jodatsalzen, Polyvinylpyrrolidon-Jod (PVP-I) und Mischungen davon umfasst.

4. Verfahren nach Anspruch 3, wobei die Jodquelle eine Mischung von elementarem Jod und PVP-I ist.

5. Verfahren nach einem der Ansprüche 1-4, wobei das PA ein aliphatisches Polyamid, ein Nylon, ein teilaromatisches Polyphthalamid und aromatisches Aramid oder irgendeine Mischung davon ist.

6. Verfahren nach Anspruch 5, wobei PA ausgewählt ist aus der Gruppe bestehend aus Polyamid 6, Polyamid 11, Polyamid 12, Polyamid 5-10, Polyamid 6-6, Polyamid 6-9, Polyamid 4-10, Polyamid 6-10, Polyamid 6-12, Polyamid 10-10, Polyamid 10-12, Polyamid 4-6 und Polyamid 12-12, vorzugsweise Polyamid 6, Polyamid 11, Polyamid 12 und Polyamid 6-6.

7. Verfahren nach einem der vorhergehenden Ansprüche, umfassend Mischen von PA mit der/den geeigneten Jodquelle(n) und einem oder mehreren weiteren Polymer(en), Additiv(en), Weichmacher(n), bioziden Mittel(n) und/oder Antibiotikum(Antibiotika).

8. Verfahren nach einem der vorhergehenden Ansprüche, wobei das Heißschmelzextrusionsverfahren die Verwendung eines Mehrschneckenextruders umfasst, wobei vorzugsweise die Temperatur in den Mischzonen des Extruders im Bereich von von 150 °C bis 260 °C ist, bevorzugter während des Betreibens des Mehrschneckenextruders bei 300 bis 500 U/min.

9. Homogenes PA-I-Gemisch, erhältlich durch ein Verfahren nach einem der vorhergehenden Ansprüche, umfassend mindestens 0,5 Gew.-% Jod.

10. PA-I-Gemisch nach Anspruch 9, umfassend 60-99 Gew.-% Polyamid.

11. Zusammensetzung, umfassend ein homogenes PA-I-Gemisch nach Anspruch 9 oder 10, und ein oder mehrere weitere Polymer(e), Additiv(e), Weichmacher(n), biozide Mittel(n) und/oder Antibiotikum(Antibiotika).

12. Zusammensetzung nach Anspruch 11, umfassend eines oder mehrere der folgenden bioziden Mittel: Silber, Kupfer, Gold, Zinkmetalle und ihre Salze; quaternäre Aminoverbindungen; Phenole und Kresole; Halophenole, Biguanide; Aniline und Triclosan.

13. Verwendung eines PA-I-Gemischs nach Anspruch 9 oder 10, oder einer Zusammensetzung nach einem der Ansprüche 11-12 bei der Herstellung eines bioziden Materials, wobei das biozide Material vorzugsweise gegen Bakterien, Viren, Hefen, Pilze, Schimmel, Sporen und/oder Protozoen aktiv ist.

14. Biozides Produkt, umfassend ein PA-I-Gemisch nach Anspruch 9 oder 10, oder eine Zusammensetzung nach einem der Ansprüche 11 oder 12.

15. Biozides Produkt nach Anspruch 14, ausgewählt aus der Gruppe bestehend aus Luftfiltern, Wasser- und Lösungsfiltern, Mundkappen, Zahnbürstenborsten, Geräte- oder Vorrichtungsgehäusen, Nahtmaterialien, Kleidungsstücken, Vorhängen, Decken, harte Oberflächenbeschichtungen, Zahnmedizinartikeln, Baumaterialien, Konstruktionsmaterialien, Teppichen, medizinischen Vorrichtungen, Wundbeschichtungsgaze, Lichtschaltern, Türgriffen, Operationsgeräten und Endoskopen, Kathetern, Schläuchen, Atemschläuchen, Endotrachealschläuchen, intravaskulären Kathetern, tiefen intravenösen Leitungen, Schuhen und Schuhsohlen, Schwämmen, Schneidbrettern, Masken, Spritzengehäusen, Krankenhausbehältern, synthetischen Folien und Abdeckungen, Lebensmittel- und Vorrichtungsverpackungen, Küchenarbeitsplatten, flexiblen Oberflächenbeschichtungen, Schlüsselbrettern, Polsterungen, Teller, Windeln, Tüchern, Taschentüchern, Befestigungselementen und Bodenbelägen.

## Revendications

1. Procédé pour former un mélange biocide de polyamide et d'iode (PA-I), comprenant le mélange de polyamide (PA) avec une source convenable d'iode (I) comprenant de l'iode élémentaire et d'autres ingrédients facultatifs, suivi d'une solubilisation du mélange par soumission du mélange à un traitement d'extrusion à chaud pour que soit obtenu un mélange homogène dans lequel tous les ingrédients sont uniformément distribués dans toute la matrice complexe de polyamide-iode.

2. Procédé selon la revendication 1, dans lequel le mélange comprend un complexe de PA-I comprenant 0,1 à 15 %, de préférence 0,5 à 10 % en poids d'iode élémentaire.

3. Procédé selon la revendication 1 ou 2, dans lequel la source d'iode comprend en outre un ou plusieurs sels iodures et iodates, du polyvinylpyrrolidone-iode (PVP-I), et leurs mélanges.

4. Procédé selon la revendication 3, dans lequel la source d'iode est un mélange d'iode élémentaire et de PVP-I.

5. Procédé selon l'une quelconque des revendications 1 à 4, dans lequel le PA est un polyamide aliphatique, un nylon, un polyphtalamide semi-aromatique ou un aramide aromatique, ou l'un quelconque de leurs mélanges.

6. Procédé selon la revendication 5, dans lequel le PA est choisi dans le groupe constitué par le polyamide 6, le polyamide 11, le polyamide 12, le polyamide 5-10, le polyamide 6-6, le polyamide 6-9, le polyamide 4-10, le polyamide 6-10, le polyamide 6-12, le polyamide 10-10, le polyamide 10-12, le polyamide 4-6 et le polyamide 12-12, de préférence le polyamide 6, le polyamide 11, le polyamide 12 et le polyamide 6-6.

7. Procédé selon l'une quelconque des revendications précédentes, comprenant le mélange de PA avec la ou les sources convenables d'iode et un ou plusieurs autres polymères, additifs, plastifiants, agents biocides, et/ou antibiotiques.

8. Procédé selon l'une quelconque des revendications précédentes, dans lequel le traitement d'extrusion à chaud comprend l'utilisation d'une extrudeuse multi-vis, de préférence dans lequel la température dans les zones de mélange de l'extrudeuse est située dans la plage allant de 150°C à 260°C, mieux encore alors que l'extrudeuse multi-vis fonctionne à 300 à 500 t/min.

9. Mélange de PA-I homogène pouvant être obtenu par un procédé selon l'une quelconque des revendications précédentes, comprenant au moins 0,5 % en poids d'iode.

10. Mélange de PA-I selon la revendication 9, comprenant 60 à 99 % en poids de polyamide.

11. Composition comprenant un mélange de PA-I homogène selon la revendication 9 ou 10, et un ou plusieurs autres polymères, additifs, plastifiants, agents biocides, et/ou antibiotiques.

12. Composition selon la revendication 11, comprenant un ou plusieurs des agents biocides suivants : argent, cuivre, or, zinc métalliques et leurs sels ; composés amino quaternaires ; phénols et crésols ; halogénophénols ; biguanides ; anilides et triclosan.

13. Utilisation d'un mélange de PA-I selon la revendication 9 ou 10, ou d'une composition selon l'une quelconque des revendications 11 et 12, dans la fabrication d'un matériau biocide ; de préférence dans laquelle ledit matériau biocide est actif contre des bactéries, virus, levures, champignons, moisissures, spores et/ou protozoaires.

14. Produit biocide comprenant un mélange de PA-I selon la revendication 9 ou 10, ou une composition selon l'une quelconque des revendications 11 et 12.

15. Produit biocide selon la revendication 14, choisi dans le groupe constitué par les filtres à air, les filtres à eau et à solutions, les masques buccaux, les poils de brosse à dents, les boîtiers d'équipements ou de dispositifs, les sutures, les vêtements, les rideaux, les couvertures, les revêtements de surfaces dures, les articles de dentisterie, les matériaux de construction, les matériaux d'édification, les tapis, les dispositifs médicaux, les gazes de revêtement de plaies, les interrupteurs, les poignées de porte, les endoscopes et scopes opératoires, les cathéters, les tubes, les tubes respiratoires, les sondes endotrachéales, les cathéters intravasculaires, les lignes intraveineuses profondes, les chaussures et semelles de chaussures, les éponges, les planches à découper, les masques, les corps de seringue, les récipients hospitaliers, les feuilles et housses synthétiques, les emballages de produits alimentaires et de dispositifs, les plans de travail, les revêtements de surfaces flexibles, les claviers, les tissus d'ameublement, les assiettes, les couches, les tissus, les mouchoirs, les fixations et les revêtements de sol.
